# EUROPÄISCHE PATENTSCHRIFT

(11) **EP 1 672 041 B1**
(45) Veröffentlichungstag und Bekanntmachung des Hinweises auf die Patenterteilung: **21.03.2012**
(21) Anmeldenummer: 05026426.6
(22) Anmeldetag: 03.12.2005
(51) Int. Cl.: C09D 175/06, C08G 18/80, C08G 18/79, C08G 18/42

(54) **Wässrige Beschichtungen für Nahrungsmittelbehälter**
Aqueous coatings for food container
Revêtements pour un récipient alimentaire

(30) Priorität: 17.12.2004 DE 102004060798
(43) Veröffentlichungstag der Anmeldung: 21.06.2006
(73) Patentinhaber: Bayer MaterialScience AG, 51368 Leverkusen (DE)
(72) Erfinder: Wamprecht, Christian, Dr., 41472 Neuss (DE); Mazanek, Jan, Dr., 51061 Köln (DE); Baumbach, Beate, Dr., 51399 Burscheid (DE); Küttner, Wolfram, 51467 Bergisch Gladbach (DE); Greszta-Franz, Dorota, Dr., 40699 Erkrath (DE)

(56) Entgegenhaltungen:
- EP-A- 0 022 452
- EP-A- 0 114 358
- EP-A- 0 330 139
- DE-A1- 2 824 418
- DE-A1- 19 703 091

## Beschreibung

Die vorliegende Erfindung betrifft die Verwendung wässriger Beschichtungsmittel zur Innenbeschichtungen von metallischen Nahrungsmittelbehältern und -verpackungen.

Es ist bekannt, Einkomponenten-Polyurethan-Einbrennlacke (1K-PUR-Einbrennlacke), bestehend hauptsächlich aus einem blockierten Polyisocyanat als Vernetzerkomponente und einem Polyol als Bindemittelkomponente, als Beschichtungsmittel, z.B. für die Automobil-Erstlackierung, die allgemeine Industrielackierung und im Coil-Coating einzusetzen. Als 1K-PUR-Einbrennlacke werden solche Lacke bezeichnet, die bei erhöhten Temperaturen unter Ausbildung eines Polyurethannetzwerkes aushärten. Dabei reagieren die Hydroxylgruppen eines Polyols mit den (de)blockierten NCO-Gruppen eines Polyisocyanates. Die Reaktion von mit CH-aciden Estern blockierten NCO-Gruppen mit Polyolen stellt dagegen eine Umesterung dar, bei der kein Polyurethannetzwerk entsteht, deshalb werden Lacke auf Basis solcher blockierten Polyisocyanate nicht als 1K-PUR-Einbrennlacke bezeichnet.

Nachteilig am Einsatz von blockierten Polyisocyanaten zur Herstellung von Polyurethanbeschichtungen ist beispielsweise, dass je nach Art des Blockierungsmittel und der Einbrennbedingungen ein mehr oder weniger großer Teil des Blockierungsmittels in freier Form in der Beschichtung verbleibt. Dabei hängt der Restgehalt an Blockierungsmittel vom jeweiligen Blockierungsmittel selbst, von dessen Reaktivität und von den Einbrennbedingungen ab.

Bei der Herstellung von Beschichtungen auf metallischen Verpackungen, dem sogenannten "Can Coating", werden Bleche, z.B. aus Weißblech oder Aluminium, mit einem Einbrennlack beschichtet und nach Aushärtung des Lackes zu den gewünschten Gebrauchsgütern verarbeitet. Hierbei werden hohe Anforderungen an die Beschichtung gestellt, insbesondere, wenn es sich um die Innenbeschichtung von Nahrungsmittelbehältern, beispielsweise Getränkedosen, handelt. Zum einen müssen die Lacke flexibel genug sein, um Verformungen während der Herstellung der Behälter und bei Transport der fertig verpackten Güter ohne Beschädigungen der Beschichtung (z.B. durch Rissbildung) zu überstehen, zum anderen muss das metallische Substrat zuverlässig vor dem Einfluss korrosiver Medien geschützt werden. Zusätzlich muss die Haftfähigkeit auf dem metallischen Substrat sowohl bei der Verformung als auch bei einer nachträglichen Sterilisierung, wie sie insbesondere bei Behältern, die als Verpackung für Nahrungsmittel und Getränke dienen, notwendig ist, gegeben sein. Es ist nicht erwünscht, dass Bestandteile der Beschichtung bei Herstellung und Lagerung der verpackten Güter in diese übergehen, weil dies zur Beeinträchtigung der Produkteigenschaften führen kann.

Zum Stand der Technik gehört die Verwendung von Beschichtungsmitteln auf Basis von Bisphenol-A-Diglycidyl-Ether (BADGE). Es ist bekannt, dass geringe Mengen dieser in-vitro Tests mutagen wirksamen Substanz in die verpackten Nahrungsmittel übergehen können. Daher sollte es Ziel sein, BADGE-freie Beschichtungen für die Innenbeschichtung von Dosen mit Nahrungsmittelkontakt einzusetzen.

Der Einsatz von Polyurethan-Pulverlacken auf Basis von Polyisocyanaten und Polyolen zur Herstellung von Innenbeschichtungen von Verpackungsbehältern wird in der DE-A 195 45 424 beschrieben. Es ist jedoch nicht bekannt, Polyurethanlacke auf Basis blockierter Polyisocyanate zur Beschichtung des überwiegenden Teils von Nahrungsmittelbehältern mit dauerhaftem Kontakt zum Nahrungsmittel zu verwenden. Dies ist darauf zurückzuführen, dass dem Fachmann bekannt ist, dass solche Beschichtungen einen Restgehalt an freiem Blockierungsmittel enthalten. Es musste daher davon ausgegangen werden, dass diese Chemikalien in das Füllgut übergehen würden und dort zu Geschmacksveränderungen oder Trübungen oder im schlimmsten Fall zur gesundheitlichen Schädigung des Konsumenten führen könnten.

Daher ist nie in Betracht gezogen worden, Beschichtungssysteme auf Basis blockierter Polyisocyanate, die im Zuge der Vernetzung das Blockierungsmittel abspalten, zur Beschichtung von in direktem Kontakt mit Nahrungsmitteln stehenden Oberflächen einzusetzen, weil von den abgespaltenen Blockierungsmitteln ein potenzielles toxikologisches Risiko ausgehen könnte. Insbesondere ist bisher nicht versucht worden, wässrige Beschichtungssysteme auf Polyurethanbasis für diesen Zweck einzusetzen.

Die Aufgabe der vorliegenden Erfindung bestand daher in der Bereitstellung wässriger Beschichtungsmittel zur Innenbeschichtung von, vorzugsweise metallischen, Nahrungsmittelverpackungen mit dauerhaftem Kontakt zu Nahrungsmitteln, die die o.g. Nachteile nicht aufweisen.

Diese Aufgabe wurde mit selbstvernetzenden Einkomponenten-Einbrennlacken gelöst. Überraschenderweise enthalten die Lackbeschichtungen auf Basis der erfindungsgemäßen Beschichtungsmittel entweder keine relevanten Mengen an freien Blockierungsmitteln mehr oder diese migrieren nicht - wie an sich vermutet - in die verpackten Nahrungsmittel. Jedenfalls werden in diesen keine relevanten Mengen an Beschichtungsmitteln gefunden, selbst dann nicht, wenn die Innenfläche des Behältnisses vollständig mit den erfindungsgemäß verwendeten Beschichtungsmitteln überzogen ist, wie dies beispielsweise bei Getränkedosen der Fall ist. Die erfindungsgemäße Lehre überwindet demnach ein bisher bestandenes Vorurteil.

Gegenstand der vorliegenden Erfindung ist daher die Verwendung eines wässrigen Beschichtungsmittels enthaltend
A) mindestens ein im Mittel mindestens zwei NCO-Gruppen pro Molekül enthaltendes Polyisocyanat bei dem mindestens 85 % der NCO-Gruppen mit einem Blockierungsmittel blockiert sind, wobei das Blockierungsmitttel ε-Caprolactam und/oder eine Hydroxycarbonsäure und/oder ein aliphatischer Alkohol mit einem Molekulargewicht <100 ist,
B) mindestens ein im Mittel mindestens zwei reaktive Hydroxylgruppen pro Molekül enthaltendes hydrophiliertes Polyesterpolyol oder Gemisch aus hydrophilierten und nicht hydrophilierten Polyesterpolyolen mit einer Säurezahl von ≥ 15 mg KOH/g, einer Hydroxylzahl von 20 bis 300 mg KOH/g und einem gewichtsgemittelten Molekulargewicht M_{w} von > 1500 g/mol und
C) gegebenenfalls Hilfs- und Zusatzstoffen,
wobei das Verhältnis zwischen den blockierten Isocyanatgruppen (Komponente A) zu allen gegenüber Isocyanaten reaktionsfähigen Gruppen 0,5 bis 5,0 zu 1, bevorzugt 0,6 bis 2,0 zu 1, besonders bevorzugt 0,8 bis 1,5 zu 1 beträgt, zur Innenbeschichtung von Nahrungsmittelverpackungen.

Geeignete Polyisocyanate A) sind monomerenarme, durch Modifizierung insbesondere aliphatischer, cycloaliphatischer, araliphatischer und/oder aromatischer Diisocyanate hergestellte, aus mindestens zwei Diisocyanaten aufgebaute Polyisocyanate mit vorzugsweise Uretdion-, Isocyanurat-, Urethan-, Allophanat-, Biuret-, Iminooxadiazindion- und/oder Oxadiazintrionstruktur oder Gemische dieser Verbindungen.

Geeignete Diisocyanate sind Diisocyanate mit aliphatisch und/oder cycloaliphatisch gebundenen Isocyanatgruppen, wie z.B. 1,4-Diisocynanatobutan, 1,6-Diisocyanatohexan, Isophorondiisocyanat, 4,4'-Diisocyanatodicyclohexylmethan und 1,3- und 1,4-Bis(2-isocyanatoprop-2yl)-benzol.

Bevorzugt sind Polyisocyanate bzw. Polyisocyanatgemische mit Isocyanuratstruktur und/oder Iminooxadiazindion- und/oder Biuretstruktur auf Basis von HDI, IPDI und/oder 4,4'-Diisocyanatodicyclohexylmethan oder Gemische dieser Verbindungen. Besonders bevorzugt werden Polyisocyanate auf Basis von IPDI mit Isocyanuratstruktur eingesetzt, weil diese nach der Europäischen Norm EEC 2002/72 für den Einsatz in Verpackungsmaterialien für Lebensmittel zugelassen sind.

Selbstverständlich können alle genannten Polyisocyanate auch als Gemische untereinander oder auch mit anderen Vernetzern wie mit Melaminharzen zur Herstellung der Beschichtungsmittel eingesetzt werden.

Geeignete Blockierungsmittel zur Herstellung der Komponente A) sind p-Hydroxybenzoesäureester, ε-Caprolactam und aliphatische Alkohole mit einem Molgewicht <100 oder Gemische dieser Verbindungen. Bevorzugt werden ε-Caprolactam und/oder p-Hydroxybenzoesäureester eingesetzt.

Die in den Beschichtungsmitteln eingesetzten blockierten Polyisocyanate können durch Umsetzung von Polyisocyanaten mit ε-Caprolactam und/oder aliphatischen Alkoholen mit einem Molekulargewicht <100 und/oder Hydroxycarbonsäure bzw. deren Derivaten der allgemeinen Formel (I) 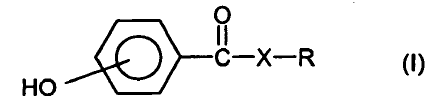 in welcher
- X: Sauerstoff, NH oder NR und
- R: Wasserstoff, einen C₁- bisC₈-Alkyl-oder Cycloalkylrest bedeutet,
erhalten werden.

Als Beispiele für die erfindungsgemäßen Hydroxybenzoesäuren oder deren Derivate seien genannt: o-, m- und p-Hydroxybenzoesäure und deren Methyl-, Ethyl-, (Iso)propyl-, Butyl-, 2-Ethylhexyl-, tert-Butyl-Neopentylester, Amide wie Methyl- und Ethylamid, Dimethyl- und Diethylamid. Bevorzugte Hydroxycarbonsäurederivate sind Methyl-, Ethyl- und Butylester, besonders bevorzugt sind Propylester der o- und/oder p-Hydroxybenzoesäure.

Bevorzugte Polyisocyanate (A) enthalten
i) 100 Äquivalent-% Polyisocyanat,
ii) 60-100 Äquivalent-% Hydroxybenzoesäure-Derivate der Formel (I) und/oder ε-Caprolactam,
iii) 0-40 Äquivalent-% einer mindestens difunktionellen Hydroxyl- und/oder Aminogruppen enthaltenden Verbindung, mittleren Molgewichts von 32 bis 3000, bevorzugt 32 bis 1500 sowie
iv) gegebenenfalls Zuschlagstoffe und Hilfsstoffe,
wobei die Mengenverhältnisse der Reaktionspartner so gewählt werden, dass das Äquivalentverhältnis von NCO-Gruppen des Polyisocyanats zu gegenüber Isocyanaten reaktionsfähigen Gruppen der Komponenten ii) und iii) bei 1:0,8 bis 1:1,2 liegt.

Als difunktionelle Kettenverlängerungskomponente iii) kommen beispielsweise Diamine, Diole und auch Hydroxyamine im Molekulargewichtsbereich von 32 bis 300 in Betracht. Bevorzugt werden C₂-C₁₂ Di- und Triole eingesetzt sowie alle Isomeren und beliebige Mischungen nachfolgend aufgeführter Verbindungen untereinander: Ethandiole, Propandiole, Butandiole, Pentandiole, Hexandiole, Heptandiole, Octandiole, Nonandiole, Decandiole, Trimethylolethan sowie -propan. Weitere Beispiele sind Hydrazin, Ethylendiamin, Isophorondiamin, das Bisketimin aus Isophorondiamin und Methylisobutylketon, 1,4-Dihydroxybutan, Ethanolamin, N-Methylethanolamin, Hydroxyethylethylendiamin, sowie das Addukt von 2 Mol Propylencarbonat und 1 Mol Hydrazin der allgemeinen Formel (II)

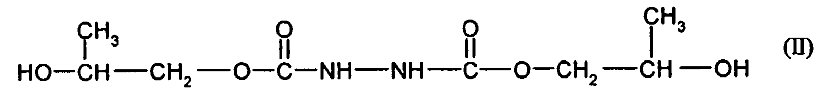

Als Lackbindemittel (B) wird mindestens ein im Mittel mindestens zwei reaktive Hydroxylgruppen pro Molekül enthaltendes hydrophiliertes Polyesterpolyol oder Gemisch aus hydrophilierten und nicht hydrophilierten Polyesterpolyolen eingesetzt.

Es ist jedoch auch möglich, neben den erfindungsgemäß einzusetzenden Polyesterpolyolen anteilig andere Polyhydroxylverbindungen einzusetzen, jedoch sollte deren Anteil nicht mehr als 50 Mol-%, bezogen auf die Gesamtheit der hydroxyfunktionellen Verbindungen (B), ausmachen. Andere Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen.

Die als Lackbindemittel (B) verwendeten Verbindungen enthalten im Mittel mindestens zwei mit NCO-Gruppen reaktive Hydroxylgruppen pro Molekül und sind mit Wasser verdünnbar oder in Wasser löslich oder dispergierbar. Als Polyhydroxylverbindungen (B) werden solche mit einem mittleren Molekulargewicht Mw von 1500 bis 60.000, einem OH-Gehalt nach DIN 53 240/2 von 0,5 bis 30% und einer Säurezahl von ≥ 15 mg KOH/g eingesetzt.

Bevorzugt als Polyhydroxylverbindungen (B) werden Polyole eingesetzt, die aus toxikologisch unbedenklichen Bestandteilen aufgebaut sind. Besonders bevorzugt sind solche, die nach § 175300, USA Code of Federal Regulations Nr. 21, FDA - konform sind und höchstens 30 Gew.-% organische Lösemittel enthalten. In Kombination mit den Polyisocyanatvernetzern (A) liefern diese Polyhydroxylverbindungen (B) Beschichtungen mit sehr gutem Eigenschaftsniveau, wie z. B. hohe Elastizität, ein hohes Beständigkeitsniveau gegen Lösemitteln, Chemikalien sowie fettige und ölige Substanzen und gleichzeitig eine hohe Resistenz bei thermischer Beanspruchung.

FDA-konform in diesem Zusammenhang bedeutet, dass ausschließlich Komponenten in den Bindemittelzusammensetzungen bzw. bei deren Herstellung verwendet werden, die gemäß § 175300 in USA Code of Federal Regulations Nr. 21 (FDA) gelistet sind.

Solche besonders bevorzugten Polyole (B) enthalten ein oder mehrere wasserverdünnbare Polyesterpolyole und werden hergestellt durch Umsetzung von
a) 49 bis 40 Mol-%, bevorzugt 49 bis 45 Mol-%, einer Carbonsäurekomponente enthaltend
   a1) eine oder mehrere aliphatische, cycloaliphatische, araliphatische und/oder aromatische Carbonsäuren einer COOH-Funktionalität ≥ 2, bevorzugt 2 bis 3, oder deren Anhydride und
   a2) gegebenenfalls aromatische, cycloaliphatische und/oder aliphatische Monocarbonsäuren
   mit
b) 51 bis 60 Mol-%, bevorzugt 51 bis 55 Mol-%, einer Alkoholkomponente enthaltend
   b1) ein oder mehrere aliphatische, cycloaliphatische und/oder araliphatische Polyole eines zahlenmittleren Molekulargewichts von 62 bis 272 g/mol sowie einer mittleren OH-Funktionalität ≥ 2, bevorzugt 2 bis 4, und
   b2) gegebenenfalls aliphatische, cycloaliphatische und/oder araliphatische Monoalkohole
   und gegebenenfalls
c) Wasser
d) Neutralisationsmitteln und
e) gegebenenfalls Lösemitteln, Hilfs- und Zusatzstoffen.

In der Komponente al) werden als aromatische Di- oder Polycarbonsäure bzw. -anhydride bevorzugt Phthalsäure, Isophthalsäure, Terephthalsäure, Trimellitsäure, Phthalsäureanhydrid, Trimellitsäureanhydrid und/oder Pyromellitsäureanhydrid, besonders bevorzugt Phtalsäureanhydrid, Terephthalsäure und/oder Isophthalsäure, ganz besonders bevorzugt Phtalsäureanhydrid und/oder Terephthalsäure eingesetzt.

Geeignete aliphatische Di- oder Polycarbonsäuren a1) sind bevorzugt Bernsteinsäure, Maleinsäure, Adipinsäure, Sebacinsäure, Dodecandisäure, dimerisierte Fettsäuren, Bernsteinsäureanhydrid und/oder Maleinsäureanhydrid, besonders bevorzugt sind Bernsteinsäureanhydrid, Maleinsäureanhydrid und/oder Adipinsäure, ganz besonders bevorzugt sind Adipinsäure und/oder Maleinsäureanhydrid.

Geeignete cycloaliphatische Di- oder Polycarbonsäuren a1) sind bevorzugt 1,4-Cyclohexandicarbonsäure, Hexahydrophthalsäure und/oder Hexahydrophthalsäureanhydrid, besonders bevorzugt sind 1,4-Cyclohexandicarbonsäure und/oder Hexahydrophthalsäureanhydrid, ganz besonders bevorzugt ist 1,4-Cyclohexandicarbonsäure.

In der Komponente a2) werden bevorzugt als Monocarbonsäuren Essigsäure, Propionsäure, 1-Octansäure, 1-Decansäure, 1-Dodecansäure, 1-Octadecansäure, gesättigte und ungesättigte Fettsäuren und/oder Benzoesäure, besonders bevorzugt 1-Dodecansäure, 1-Octadecansäure, gesättigte und ungesättigte Fettsäuren und/oder Benzoesäure, ganz besonders bevorzugt gesättigte und ungesättigte Fettsäuren und/oder Benzoesäure eingesetzt.

Als Komponente b1) werden als aliphatische Polyole bevorzugt Ethylenglykol, Diethylenglykol, Triethylenglykol, 1,2-Propandiol, 1,4-Butandiol, Neopentylglycol, 1,6-Hexandiol, Glycerin, Trimethylolpropan, Pentaerythrit und/oder Sorbit, besonders bevorzugt Neopentylglycol, Ethylenglykol, Diethylenglykol, 1,2-Propandiol, 1,6-Hexandiol, Glycerin und/oder Trimethylolpropan, ganz besonders bevorzugt Neopentylglycol, Ethylenglykol, Diethylenglykol, 1,2-Propandiol und/oder Trimethylolpropan eingesetzt.

Monoalkohole b2) sind bevorzugt Methanol, Ethanol, 1-Propanol, 1-Butanol, 2-Butanol, Isobutanol, 1-Pentanol, 1-Hexanol, 2-Ethylhexanol, 1-Octanol, 1-Decanol, 1-Dodecanol, Butylglykol, und/oder Butyldiglykol, besonders bevorzugt 2-Ethylhexanol, 1-Decanol, 1-Dodecanol, Cyclohexanol, Butylglykol und/oder -Butyldiglykol, ganz besonders bevorzugt 2-Ethylhexanol, Cyclohexanol, Butylglykol und/oder Butyldiglykol.

Die genannten Verbindungen der Komponenten a1), a2), b1) und b2) können jeweils einzeln oder in beliebigen Mischungen untereinander in den jeweiligen Komponenten eingesetzt werden.

Die genannten Verbindungen der Komponenten a1), a2), b1) und b2) können jeweils einzeln oder in beliebigen Mischungen untereinander in den jeweiligen Komponenten zur Herstellung der Polyesterpolyole B) eingesetzt werden. Bevorzugt werden Verbindungen der Komponenten a1) und b1) eingesetzt. Besonders bevorzugt zur Herstellung der Polyesterpolyole B) werden als Verbindungen der Komponente a1) Adipinsäure, Maleinsäureanhydrid, Phthalsäureanhydrid, Isophthalsäure und Terephthalsäure und als Verbindungen der Komponente b1) Ethylenglykol, Diethylenglykol, 1,2-Propandiol, Dipropylenglykol, Neopentylglycol und Trimethylolpropan eingesetzt.

Die Herstellung der Polyesterpolyole B) erfolgt in an sich bekannter Weise nach Methoden, wie sie beispielsweise in "Ullmanns Encyclopädie der Technischen Chemie", Verlag Chemie Weinheim, 4. Auflage (1980) Band 19, Seiten 61 ff. oder von H. Wagner und H. F. Sarx in "Lackkunstharze", Carl Hanser Verlag, München (1971), Seiten 86 bis 152 ausführlich beschrieben sind.

Die Herstellung wird bevorzugt in der Schmelze, gegebenenfalls in Gegenwart einer katalytischen Menge eines üblichen Veresterungskatalysators, wie z.B. Säuren, Basen oder Übergangsmetallverbindungen, wie z.B. Titantetrabutylat, Dibutylzinnoxid oder Butylzinnsäure, bei Temperaturen von 80 bis 270°C, bevorzugt von 100 bis 250°C, unter Stickstoffatmosphäre durchgeführt. Dabei dient der Stickstoffstrom auch dazu, das entstehende Reaktionswasser zu entfernen. Das Entfernen des Reaktionswassers kann jedoch auch durch Anlegen eines Vakuums von bevorzugt bis zu 0,1 mbar erfolgen. Gegebenenfalls kann auch ein Schleppmittel, wie z.B. Xylol, zum Austragen des Reaktionswassers zugegeben werden. Die Veresterungsreaktion wird so lange durchgefiihrt, bis die angestrebten Werte für die Hydroxyl- und Säurezahl sowie für die Viskosität erreicht sind. In einer bevorzugten Ausführungsform der Erfindung wird zunächst ein OH-funktionelles Polyesterpolyol hergestellt, das keine bzw. nur geringe Mengen an freien Carbonsäure- und/oder Carboxylatfunktionen aufweist, welches dann in einem nachfolgenden Schritt mit einem cyclischen Dicarbonsäureanhydrid, wie z.B. Phthalsäureanhydrid, unter Ringöffnung und Halbesterbildung umgesetzt wird, wobei dann die gewünschte Anzahl an freien Carbonsäure- und/oder Carboxylatgruppen entstehen.

Die gewichtsmittleren Molekulargewichte M_{w} der wasserverdünnbaren Polyesterpolyole B) liegen bei > 1.500 g/mol, bevorzugt > 2.000 g/mol, besonders bevorzugt > 3.000 g/mol und ganz besonders bevorzugt zwischen 5.000 und 60.000 g/mol.

Die OH-Zahlen der wasserverdünnbaren Polyesterpolyole B) liegen im Bereich von 20 bis 300 mg KOH/g, bevorzugt von 25 bis 250 mg KOH/g, besonders bevorzugt von 30 bis 200 mg KOH/g und ganz besonders bevorzugt von 35 bis 150 mg KOH/g, bezogen auf Festharz.

Die Säurezahlen der wasserverdünnbaren Polyesterpolyole B) liegen im Bereich von ≥ 15 mg KOH/g, bevorzugt von 20 bis 75 mg KOH/g, besonders bevorzugt von 25 bis 70 mg KOH/g und ganz besonders bevorzugt bei 30 bis 60 mg KOH/g, bezogen auf Festharz.

Geeignete Neutralisationsmittel d) zur Neutralisation der Carbonsäuregruppen der Polyesterpolyole B) sind sowohl anorganische als auch organische Basen. Bevorzugt werden primäre, sekundäre und tertiäre Amine und Ammoniak, besonders bevorzugt tertiäre Amine, wie z.B. Triethylamin, Tributylamin, N-Methyldiethanolamin, N,N-Dimethylethanolamin, N,N-Diethylethanolamin, Triethanolamin, Triisopropylamin und Triisopropanolamin eingesetzt. Ganz besonders bevorzugt sind N,N-Dimethylethanolamin, Triethanolamin und Triethylamin.

Bestandteile der Komponente e) sind beispielsweise Entschäumer, Verdicker, Verlaufsmittel, Pigmente, Füllstoffe, Emulgatoren, Dispergierhilfsmittel, Lichtschutzmittel und auch Lösemittel.

Die gewünschte Verarbeitungsviskosität wird in aller Regel durch die Zugabe organischer Lösemittel oder Wasser, bevorzugt Wasser, eingestellt.

Um ganz bestimmte Verarbeitungsviskositäten einzustellen oder besondere rheologische Eigenschaften zu erzielen, ist es auch möglich, Verdickungsmittel oder Kombinationen von verschiedenen Verdickungsmitteln, z.B. ionische und assoziative Verdicker, einzusetzen.

Um die Polyester B) wasserverdünnbar zu machen, müssen die enthaltenen Carbonsäuregruppen mit einem Neutralisationsmittel vollständig oder teilweise neutralisiert werden. Dabei kann das Neutralisationsmittel d) vor, während oder nach der Überführung des erfindungsgemäßen Polyesters in die wässrige Phase zugegeben werden, wobei eine Neutralisation vor der Überführung in die wässrige Phase bevorzugt ist.

Üblicherweise beträgt die dazu verwendete Menge der Komponente d) 0,4 bis 1,5 Mol, bevorzugt von 0,5 bis 1,4 Mol und besonders bevorzugt 0,6 bis 1,3 Mol, bezogen auf alle in B) rechnerisch vorhandenen COOH-Funktionen.

Zur Überführung der Polyesterpolyole B) in die wässrige Phase werden diese, gegebenenfalls unter starker Scherung, wie z.B. starkem Rühren, entweder in das Dispergierwasser c) eingetragen oder man rührt umgekehrt das Dispergierwasser c) zu dem/den Polyesterpolyol(en). Es ist dabei oft vorteilhaft, dem Polyesterpolyol vor dem Dispergiervorgang wasserverdünnbare organische Lösungsmittel der Komponente e) zuzusetzen, die quasi als Hilfs- oder Colöser dienen. Solche Lösemittel sind beispielsweise Butylglykol oder Butyldiglykol.

Die erfindungsgemäßen wässrigen Beschichtungsmittel werden hergestellt, dadurch gekennzeichnet, dass die Komponenten A), B) und gegebenenfalls C) gemischt werden und anschließend die Zugabe von Wasser und Dispergierung erfolgt, wobei beim Vermischen der Bestandteile A) bis C) unterhalb der Temperatur, bei der die blockierten NCO-Gruppen mit den übrigen Bestandteilen reagieren können, gearbeitet wird. Bevorzugt findet das Vermischen bei Temperaturen zwischen 15 und 100°C, besonders bevorzugt zwischen 20 und 80 °C statt.

Eine besondere Ausführungsform des Verfahrens besteht darin, dass eine nicht oder nur wenig hydrophilierte Komponente A) vor der Wasserzugabe mit der Komponente B) vermischt wird und beide Komponenten anschließend gemeinsam dispergiert werden. Als wenig hydrophilierte Komponente A) wird eine solche Verbindung verstanden, die eine so geringe Menge an hydrophilen Gruppen enthält, welche nicht zur Ausbildung einer sedimentationsstabilen Dispersion ausreicht. Diese wenig hydrophile Komponente A) würde sich entweder gar nicht in Wasser dispergieren lassen, bzw. eine eventuelle entstandenen Dispersion wäre nicht stabil und es würde sich ein Bodensatz bilden.

Als Hilfs- und Zusatzstoffe C) können z.B. Weichmacher, Verlaufshilfsmittel und andere Additive, Pigmente, Füllstoffe, Lösemittel oder die Vernetzungsreaktion beschleunigende Katalysatoren verwendet werden.

Als Katalysatoren können die in der Polyurethanchemie bekannten Verbindungen eingesetzt werden, die die Reaktion von Isocyanatgruppen mit Hydroxylgruppen beschleunigen. Beispielsweise sind dies Zinn-, Zink-, Zirkonium-, Wismut- und Titanverbindungen. Werden Katalysatoren eingesetzt, so sind nichttoxische Katalysatoren bevorzugt, beispielhaft seien Butylzinn-tris-(2-ethylhexanoat), Dibutylzinn-bis(2-ethylhexanoat), Tetrabutyltitanat und Zinn(II)-2-ethylhexanoat genannt.

Es können ebenfalls zusätzliche Vernetzerkomponenten eingesetzt werden. Beispielsweise sind dies Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Hydroxylgruppen oder die Menge an NCO-Gruppen enthaltenden Bestandteilen entsprechend angepasst werden.

Jede der eingesetzten Komponenten A) bis C) kann gegebenenfalls in einem organischen Lösemittel gelöst eingesetzt werden. Eine Zugabe von Lösemitteln kann aber auch im Anschluss an das Vermischen der Komponenten A) bis C) beispielsweise zur Erniedrigung der Viskosität erfolgen.

Als Lösemittel geeignet sind beispielsweise Wasser oder die an sich üblichen Lacklösemittel wie z.B. Ethylacetat, Butylacetat, 1-Methoxy-2-propylacetat, 3-Methoxy-n-butylacetat, Aceton, 2-Butanon, 4-Methyl-2-pentanon, Cyclohexanon, Toluol, Xylol, N-Methylpyrrolidon, Chlorbenzol, Ethylen- und Propylenglykolmonomethylether, Butylglykol, Butyldiglykol. Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclosol^{®} (Shell Chemicals, Eschborn, DE), Tolusol^{®} (Shell Chemicals, Eschborn, DE), Shellsol^{®} (Shell Chemicals, Eschborn, DE) im Handel sind, sind ebenfalls geeignet.

Weiterhin ist Gegenstand der Erfindung die Verwendung der Beschichtungsmittel zur Beschichtung von Emballagen und zur Innenbeschichtung von Dosen. Bevorzugt sind Dosen für die Verpackung von Lebensmitteln. Die Beschichtungsmittel werden dabei auf ein, gegebenenfalls vorbeschichtetes, metallisches Substrat aufgebracht und unter erhöhten Temperaturen ausgehärtet. Selbstverständlich können sie auch zur Herstellung von anderen Beschichtungsmaterialien und Klebstoffen eingesetzt werden.

Die Applikation der Lacke erfolgt direkt auf das metallische Substrat oder auf bereits vorher auf das Substrat aufgebrachte Lackschichten nach aus dem Stand der Technik bekannten Methoden, beispielsweise durch Spritzen, Tauchen, Fluten oder mit Hilfe von Walzen oder Rakeln.

Es wird soviel des Beschichtungsmittels aufgetragen, dass sich nach dem Abdampfen des gegebenenfalls vorhandenen Lösungsmittels und dem Aushärten der Beschichtung eine Trockenfilmschichtdicke für die Innenbeschichtung von 1 bis 50 µm, bevorzugt 3 bis 30 µm, besonders bevorzugt 5 bis 15 µm und ganz besonders bevorzugt 8 bis 12 µm ergibt.

Zur Aushärtung der Beschichtungen werden die Substrate nach der Applikation der Lacke auf Temperaturen zwischen 100°C und 400°C, bevorzugt zwischen 180°C und 260°C, ganz besonders bevorzugt zwischen 190°C und 240°C erhitzt und für 100 Minuten bis 1 Sekunde, bevorzugt für 30 Minuten bis 15 Sekunden, besonders bevorzugt für 15 Minuten bis 20 Sekunden bei dieser Temperatur gelagert. Das Erhitzen kann diskontinuierlich in Einbrennöfen geschehen oder kontinuierlich in Bandbeschichtungsanlagen, so genannten Coil-Coating-Anlagen, erfolgen.

Die Beschichtungsmittel eignen sich zur Beschichtung von Emballagen, insbesondere zur Innenbeschichtung von Dosen. Sie können aber auch zur Außenbeschichtung von Dosen eingesetzt werden. Die Emballagen können dabei aus den unterschiedlichsten Materialien bestehen und unterschiedlichster Geometrie aufweisen. Als Materialien kommen bevorzugt Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von beispielsweise Dosenhalbteilen, also Rümpfen und Deckeln, als 3-teilige Dosen und als 2-teilige, abgestreckt tiefgezogene oder anderweitig tiefgezogene Dosen, wie z.B. Getränke- und Konservendosen, beschichtet werden.

Als Nahrungs- und Genussmittel werden im Sinne der vorliegenden Erfindung Lebensmittel im weitesten Sinn oder Tiernahrungsmittel verstanden. Dies sind flüssige oder feste, sowie halbfeste Güter, die beispielsweise Wasser, Fette, Alkohol und/oder Eiweiß enthalten. Beispielsweise sind dies Kaffee, Tee oder Extrakte aus Kaffee und Tee, frucht- und/oder kohlensäurehaltige Getränke wie Obst und Gemüsesäfte-, Wein-, Limonaden, Bier, Sekt und Schaumwein, sowie Gemische dieser Getränke sowie Fisch-, Fleisch-, Gemüse oder Obstkonserven, die gegebenenfalls in den beschichteten Behältern gegart bzw. gefroren werden.

Die aus den Beschichtungsmitteln erhaltenen Lackbeschichtungen zeichnen sich durch eine sehr gute Metallhaftung, Porenfreiheit, Füllgutbeständigkeit, eine hohe Härte und zugleich besonders gute Elastizität aus, was an sich gegensätzliche Eigenschaften sind. Weiterhin besitzen die Lackbeschichtungen eine sehr hohe Beständigkeit gegen Lösemittel, Chemikalien und Wasser und weisen eine gute Sterilisations- und Pasteurisationsbeständigkeit sowie Geschmacksneutralität, einen guten Verlauf sowie einen hohen Glanz auf. Sie sind frei von "BADGE" und sehr gut geeignet als Beschichtung von Dosen mit Lebensmittelkontakt.

### Beispiele

In den folgenden Beispielen beziehen sich alle Prozentangaben auf das Gewicht.

Als Kenndaten wurden der Festgehalt (Dickschichtmethode: Deckel, 1g Probe, 1h 125°C, Konvektionsofen, Grundlage DIN EN ISO 3251), die Säurezahl (mg KOH/g Probe, Titration mit 0,1 mol/l NaOH-Lösung, Grundlage DIN 53402), die Viskosität (Rotationsviskosimeter VT 550 der Firma Haake GmbH, Karlsruhe, DE, MV-DIN Becher bei Viskosität < 10.000 mPas/23°C), die OH-Zahl (mg KOH/g Probe, Acetylierung, Hydrolyse, Titration mit 0,1 mol/1 NaOH, Grundlage DIN 53240) und die Hazen-Farbzahl (Hazen-Farbzahl nach DIN 53995, Farbzahlmessgerät Lico® 400, Dr. Lange GmbH, Berlin, DE) bestimmt. Die Säure- und OH-Zahl werden sowohl für die Lieferform (Lff.) und für das Festharz (FH) angegeben. Der OH-Gehalt kann aus der OH-Zahl mittels Division durch 33 errechnet werden.

### Verwendete Abkürzungen:

MPA: 1-Methoxy-2-propylacetat
DABCO: 1,4-Diazabicyclo[2,2,2]octan

### Beispiel 1:

### Herstellung eines wasserverdünnbaren Polyesterpolyols B1)

1646 g Diethylenglykol und 594 g Trimethylolpropan wurden zusammen in einen 5 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 120°C aufgeheizt. Dann wurden 1298 g Terephthalsäure und 1415 g Phthalsäureanhydrid zugegeben und die Mischung so auf 230°C aufgeheizt, dass die Kopftemperatur an der Kolonne 103°C nicht überstieg. Dabei schied sich das Reaktionswasser ab. Es wurde bis zu einer Harzviskosität von 50 bis 55 Sekunden (Auslaufzeit aus einem DIN-4-mm Becher bei 23°C, 55%ig gelöst in Methoxypropylacetat) kondensiert. Dann wurde auf 140°C abgekühlt. Bis zu diesem Zeitpunkt der Reaktion wurden 536 g Harz für Proben entnommen. Zum restlichen Kesselinhalt wurden 536 g Phthalsäureanhydrid gegeben und so lange bei 140°C gerührt, bis eine Harzviskosität von 87 bis 92 Sekunden (Auslaufzeit aus einem DIN-4-mm Becher bei 23°C, 55%ig gelöst in Methoxypropylacetat) erreicht war. Es resultierte ein klares, farbhelles Harz mit einer Säurezahl von 47 mg KOH/g, einer OH-Zahl von 71 mg KOH/g (bezogen auf Festharz) und einer Hazen-Farbzahl von 64 APHA (50%ige Lösung in Methoxypropylacetat).

### Beispiel 2:

### Herstellung eines wasserverdünnbaren Polyesterpolyols B2)

4418 g Diethylenglykol und 1596 g Trimethylolpropan wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 120°C aufgeheizt. Dann wurden 682 g Adipinsäure, 2717 g Terephthalsäure und 3806 g Phthalsäureanhydrid zugegeben und die Mischung so auf 230°C aufgeheizt, dass die Kopftemperatur an der Kolonne 103°C nicht überstieg. Dabei schied sich das Reaktionswasser ab. Es wurde bis zu einer Harzviskosität von 86 bis 91 Sekunden (Auslaufzeit aus einem DIN-4-mm Becher bei 23°C, 55%ig gelöst in Methoxypropylacetat) kondensiert. Dann wurde auf 140°C abgekühlt. Bis zu diesem Zeitpunkt der Reaktion wurden 1428 g Harz für Proben entnommen. Zum restlichen Kesselinhalt wurden 1428 g Phthalsäureanhydrid gegeben und so lange bei 140°C gerührt, bis eine Harzviskosität von 88 bis 92 Sekunden (Auslaufzeit aus einem DIN-4-mm Becher bei 23°C, 50%ig gelöst in Methoxypropylacetat) erreicht war. Es resultierte ein klares, farbhelles Harz mit einer Säurezahl von 46 mg KOH/g, einer OH-Zahl von 45 mg KOH/g (bezogen auf Festharz), einer Viskosität von 91 Sekunden (Auslaufzeit aus einem DIN-4-mm Becher bei 23°C, 50%ig gelöst in Methöxypropylacetat) und einer Hazen-Farbzahl von 64 APHA (70%ige Lösung in Butylglykol).

### Beispiel 3:

### Herstellung eines wasserverdünnbaren Polyesterpolyols B3)

4375 g Diethylenglykol und 1579 g Trimethylolpropan wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 120°C aufgeheizt. Dann wurden 689 g Adipinsäure, 2743 g Terephthalsäure und 3845 g Phthalsäureanhydrid zugegeben und die Mischung so auf 230°C aufgeheizt, dass die Kopftemperatur an der Kolonne 103°C nicht überstieg. Dabei schied sich das Reaktionswasser ab. Es wurde bis zu einer Harzviskosität von 100 bis 110 Sekunden (Auslaufzeit aus einem DIN-4-mm Becher bei 23°C, 50%ig gelöst in Methoxypropylacetat) kondensiert. Dann wurde auf 140°C abgekühlt. Bis zu diesem Zeitpunkt der Reaktion wurden 1428 g Harz für Proben entnommen. Zum restlichen Kesselinhalt wurden 1428 g Phthalsäureanhydrid gegeben und so lange bei 140°C gerührt, bis eine Harzviskosität von 75 bis 85 Sekunden (Auslaufzeit aus einem DIN-4-mm Becher bei 23°C, 40%ig gelöst in Methoxypropylacetat) erreicht war. Es resultierte ein klares, farbhelles Harz mit einer Säurezahl von 55 mg KOH/g, einer OH-Zahl von 40 mg KOH/g (bezogen auf Festharz), einer Viskosität von 85 Sekunden (Auslaufzeit aus einem DIN-4-mm Becher bei 23°C, 40%ig gelöst in Methoxypropylacetat) und einer Hazen-Farbzahl von 44 APHA (70%ige Lösung in Butylglykol).

### Beispiel 4:

### Herstellung eines wasserverdünnbaren Polyesterpolyols B4)

263 g Propandiol-1,2, 4923g Neopentylglycol, 1233 g Trimethylolpropan und 3122 g Maleinsäureanhydrid wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 125°C aufgeheizt. Dann wurden 2696 g Adipinsäure zugegeben und die Mischung so auf 180°C aufgeheizt, dass die Kopftemperatur an der Kolonne 103°C nicht überstieg. Dabei schied sich das Reaktionswasser ab. Es wurde bis zu einer Säurezahl zwischen 4 bis 6 mg KOH/g kondensiert. Dann wurde auf 140°C abgekühlt. Bis zu diesem Zeitpunkt der Reaktion wurden 1160 g Harz für Proben entnommen. Zum restlichen Kesselinhalt wurden 1160 g Phthalsäureanhydrid gegeben und so lange bei 140°C gerührt, bis eine Harzviskosität von 77 bis 81 Sekunden (Auslaufzeit aus einem DIN-4-mm Becher bei 23°C, 60%ig gelöst in Methoxypropylacetat) erreicht war. Es resultierte ein klares, farbhelles Harz mit einer Säurezahl von 44 mg KOH/g, einer OH-Zahl von 88 mg KOH/g (bezogen auf Festharz) und einer Viskosität von 79 Sekunden (Auslaufzeit aus einem DIN-4-mm Becher bei 23°C, 60%ig gelöst in Methoxypropylacetat). Zu 8800 g dieses Harzes werden bei 120°C 2200 g Butylglykol gegeben und anschließend 2 Stunden bei 120°C gerührt. Dann wird auf 60°C abgekühlt und die Harzlösung filtriert. Es resultierte eine Harzlösung mit einem Festgehalt von 80 Gew.-%, einer Viskosität von 13758 mPa.s und einer Hazen-Farbzahl von 26 APHA.

### Beispiel 5:

### Herstellung eines wasserverdünnbaren Polyesterpolyols B5)

261 g Propandiol-1,2, 5506g Neopentylglycol, 693 g Trimethylolpropan und 3094 g Maleinsäureanhydrid wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 125°C aufgeheizt. Dann wurden 2672 g Adipinsäure zugegeben und die Mischung so auf 180°C aufgeheizt, dass die Kopftemperatur an der Kolonne 103°C nicht überstieg. Dabei schied sich das Reaktionswasser ab. Es wurde bis zu einer Säurezahl zwischen 4 bis 6 mg KOH/g kondensiert. Dann wurde auf 140°C abgekühlt. Bis zu diesem Zeitpunkt der Reaktion wurden 1160 g Harz für Proben entnommen. Zum restlichen Kesselinhalt wurden 1160 g Phthalsäureanhydrid gegeben und so lange bei 140°C gerührt, bis eine Harzviskosität von 60 bis 64 Sekunden (Auslaufzeit aus einem DIN-4-mm Becher bei 23°C, 60%ig gelöst in Methoxypropylacetat) erreicht war. Es resultierte ein klares, farbhelles Harz mit einer Säurezahl von 41 mg KOH/g, einer OH-Zahl von 79 mg KOH/g (bezogen auf Festharz) und einer Viskosität von 62 Sekunden (Auslaufzeit aus einem DIN-4-mm Becher bei 23°C, 60%ig gelöst in Methoxypropylacetat). Zu 8800 g dieses Harzes werden bei 120°C 2200 g Butylglykol gegeben und anschließend 2 Stunden bei 120°C gerührt. Dann wird auf 60°C abgekühlt und die Harzlösung filtriert. Es resultierte eine Harzlösung mit einem Festgehalt von 79,9 Gew.-%, einer Viskosität von 8838 mPa·s und einer Hazen-Farbzahl von 25 APHA.

### Beispiel 6:

### Herstellung eines blockierten Polyisocyanats A1)

352,9g Desmodur® Z 4470 MPA/Xylol (IPDI-Trimersisat, nicht blockiert, Bayer AG, Leverkusen), 90g MPA und 90g Xylol wurden unter Stickstoff vorgelegt und auf 60°C aufgewärmt. Zu der homogenen Lösung wurde dann unter Rühren portionenweise 180,2g p-Hydroxybenzoesäurepropylester zugegeben. Nach beendeter Zugabe des Esters wurde so lange bei 60°C gerührt bis sich der Ester vollständig gelöst hatte. Anschließend wurden 1,7g DABCO (Katalysator) zugegeben und weitere 19 Stunden bei 60°C gerührt. Nach dieser Zeit wurde ein NCO-Gehalt von 0,3% titriert. Es wurden weitere 0,6g DABCO zugegeben. Nach 4 Stunden Rühren bei 60°C waren IR-spektroskopisch keine freien NCO-Gruppen mehr festzustellen. Das Produkt wurde abgekühlt und abgefüllt. Es wurden folgende Kenndaten ermittelt:
Festkörpergehalt: 60%
Viskosität bei 23°C: 6000 mPa·s
Farbe: gelblich
berechneter blockierter NCO-Gehalt ca. 5,8%

### Herstellung von erfindungsgemäßen 1K PUR-Dispensionen Beispiele 7 bis 15:

### Beispiel 7:

614,64 g (0,78 Val OH) Verbindung aus Beispiel 1 und 299,92 g Aceton wurden unter Rühren auf 65°C erwärmt und 30 Minuten gerührt. Zu der klaren Lösung wurden 149,14 g (0,2106 Val blockiertes NCO) Verbindung aus Beispiel 6 zugegeben, 40 Minuten bei 60°C gerührt, dann 45,67 g (0,5226 Mol) Dimethylethanolamin zugegeben und 10 Minuten weiter gerührt. Anschließend wurde mit 856,76 g deionisiertem Wasser von Raumtemperatur dispergiert, 1 Stunde bei 50°C nachgerührt, auf Raumtemperatur abgekühlt und im Vakuum von Aceton befreit (zuletzt 1 Stunde bei 120 mbar/40°C). Dann wurde unter Rühren auf Raumtemperatur abkühlen gelassen (ca. 4 Stunden). Die erhaltene Dispersion hatte nachfolgende Eigenschaften:

| | |
|---|---|
| Festkörpergehalt: | 45% |
| pH-Wert: | 8,54 |
| Viskosität bei 23°C, | 46700 mPa.s |
| Partikelgröße | 3512 nm |

### Beispiel 8:

622 g (0,5 Val OH) Verbindung aus Beispiel 2 wurden bei 65°C in 284,80 g Aceton unter Rühren gelöst. Zu der klaren Lösung wurden 150,0 g Desmodur® VP LS 2078 (0,25 Val blockiertes NCO) (blockiertes IPDI-Trimerisat, Bayer AG, Leverkusen) zugegeben und das Gemisch 15 Minuten bei 60°C gerührt. Danach wurden 52,25 g (0,585 Mol) Dimethylethanolamin zugegeben, 10 Minuten bei 60°C gerührt und anschließend mit 1554,83 g entionisiertes Wasser von Raumtemperatur dispergiert, 1 Stunde bei 40°C nachgerührt, auf Raumtemperatur abgekühlt und im Vakuum von Aceton befreit (zuletzt 1 Stunde bei 120 mbar/40°C). Dann wurde unter Rühren abkühlen gelassen (ca. 4 Stunden). Die erhaltene Dispersion hatte nachfolgende Eigenschaften:

| | |
|---|---|
| Festkörpergehalt: | 30 % |
| pH-Wert: | 8,70 |
| Viskosität bei 23°C: | 14500 mPa·s |
| Partikelgröße | 339 nm |

### Beispiel 9:

616,00 g (0,44 Val OH) Verbindung aus Beispiel 3 wurden in 299,52 g Aceton bei 65°C gelöst. Danach wurden 132,00 g (0,22 Val blockiertes NCO) Desmodur® VP LS 2078 (blockiertes IPDI-Trimerisat, Bayer AG, Leverkusen) zugegeben, 10 Minuten bei 60°C nachgerührt, dann 53,59 g (0,616 Mol) Dimethylethanolamin zugegeben, 10 Minuten bei 60°C nachgerührt und danach mit 1337,81 g entionisiertem Wasser von Raumtemperatur dispergiert. Danach wurde 1 Stunde bei 50°C nachgerührt, auf Raumtemperatur abgekühlt und dann Aceton im Vakuum abdestilliert (zuletzt 1 Stunde bei 120 mbar/40°C). Anschließend wurde unter Rühren abkühlen gelassen (ca. 4 Stunden). Die erhaltene Dispersion besaß nachfolgende Eigenschaften:

| | |
|---|---|
| Festkörpergehalt: | 35 % |
| pH-Wert: | 8,20 |
| Viskosität bei 23°C: | 8800 mPa·s |
| Partikelgröße | 215 nm |

### Beispiel 10:

Es wurde wie im Beispiel 9 beschrieben gearbeitet, jedoch wurden 648,12 g Verbindung aus Beispiel 3 und anstelle von Desmodur® VP LS 2078 157,26 g Verbindung aus Beispiel 6, 61,76 g (0,69 Mol) Dimethylethanolamin und 1609,8 g entionisiertes Wasser eingesetzt. Die erhaltene Dispersion besaß nachfolgende Eigenschaften:

| | |
|---|---|
| Festkörpergehalt: | 30 % |
| pH-Wert: | 8,05 |
| Viskosität bei 23°C: | 1500 mPa·s |
| Partikelgröße | 282 nm |

### Beispiel 11:

Es wurde wie im Beispiel 9 beschrieben gearbeitet, jedoch wurden 547,36 g Verbindung aus Beispiel 2, 256,69 g Aceton, 157,26 (0,22 Val blockiertes NCO) Verbindung aus Beispiel 6, 45,98 g Dimethylethanolamin und 1082,9 g entionisiertes Wasser eingesetzt. Die erhaltene Dispersion besaß nachfolgende Eigenschaften:

| | |
|---|---|
| Festkörpergehalt: | 35 % |
| pH-Wert: | 8,84 |
| Viskosität bei 23°C: | 32000 mPa·s |
| Partikelgröße | 2900 nm |

### Beispiel 12:

Es wurde wie im Beispiel 7 beschrieben gearbeitet, jedoch wurden anstelle der Verbindung aus Beispiel 6 126,36 g (0,2106 Val blockiertes NCO) Desmodur® VP LS 2078 (blockiertes IPDI-Trimerisat, Bayer AG, Leverkusen) sowie 2002,1 g entionisiertes Wasser eingesetzt. Die erhaltene Dispersion besaß nachfolgende Eigenschaften:

| | |
|---|---|
| Festkörpergehalt: | 35 % |
| pH-Wert: | 8,24 |
| Viskosität bei 23°C: | 23500 mPa.s |
| Partikelgröße | 1698 nm |

### Beispiel 13:

583,12 g (0,74 Val OH) Verbindung aus Beispiel 1 wurden in 280,34 g Aceton gelöst. Nach Zugabe von 41,14 g (0,3 Val NCO) Isophorondiisocyanat wurde so lange unter Rückfluss gekocht, bis IR-spektroskopisch keine NCO-Gruppen mehr nachweisbar waren (ca. 5 Stunden). Danach wurden 132,24 g (0,185 Val blockiertes NCO) Verbindung aus Beispiel 6 zugegeben, 10 Minuten nachgerührt, dann 44,20 g (0,496 mol) Dimethylethanolamin zugegeben, 10 Minuten gerührt und anschließend mit 1169,7 g entionisiertem Wasser von Raumtemperatur dispergiert, 1 Stunde bei 50°C nachgerührt, auf Raumtemperatur abgekühlt und im Vakuum von Aceton befreit (zuletzt 1 Stunde bei 120 mbar/40°C). Die Dispersion wurde anschließend unter Rühren auf Raumtemperatur abgekühlt (ca. 4 Stunden). Die erhaltene Dispersion besaß nachfolgende Eigenschaften:

| | |
|---|---|
| Festkörpergehalt: | 35% |
| pH-Wert: | 8,45 |
| Viskosität bei 23°C: | 15000 mPa.s |
| Partikelgröße | 3014 nm |

### Beispiel 14:

Zu 795,45 g (1,0 Val) Verbindung 4 wurden bei 23°C unter Rühren 300,00 g (0,5 Val blockiertes NCO) Desmodur® VP LS 2078 (blockiertes IPDI-Trimerisat, Bayer AG, Leverkusen) und 53,45 g (0,6 mol) Dimethylethanolamin zugegeben, 10 Minuten nachgerührt und anschließend mit 483,82 g entionisiertem Wasser von Raumtemperatur dispergiert. Dann wurde noch 1 Stunde bei 23°C nachgerührt. Die erhaltene Dispersion besaß folgende Eigenschaften:

| | |
|---|---|
| Festkörpergehalt: | 50,7% |
| pH-Wert: | 8,24 |
| Viskosität bei 23°C: | 4170 mPa.s |
| Partikelgröße | 63 nm |

### Beispiel 15:

Zu 708,86 g (1,0 Val) Verbindung 5 wurden bei 23°C unter Rühren 300,00 g (0,5 Val blockiertes NCO) Desmodur® VP LS 2078 (blockiertes IPDI-Trimerisat, Bayer AG, Leverkusen) und 43,64 g (0,49 mol) Dimethylethanolamin zugegeben, 10 Minuten nachgerührt und anschließend mit 527,54 g entionisiertem Wasser von Raumtemperatur dispergiert. Dann wurde noch 1 Stunde bei 23°C nachgerührt. Die erhaltene Dispersion besaß folgende Eigenschaften:

| | |
|---|---|
| Festkörpergehalt: | 48,6% |
| pH-Wert: | 7,42 |
| Viskosität bei 23°C: | 3700 mPa.s |
| Partikelgröße | 133 nm |

### Beispiel 16:

### Herstellung eines blockierten Polyisocyanats A2):

315 g Desmodur® N 3300 (HDI-Trimerisat, nicht blockiert, Bayer AG, Leverkusen, DE) wurden unter Stickstoff vorgelegt und auf 60°C aufgewärmt. Zu dem Polyisocyanat wurde dann unter Rühren portionenweise 187 g ε-Caprolactam zugegeben. Nach beendeter Zugabe wurde so lange bei 60°C gerührt bis sich das ε-Caprolactam vollständig gelöst hatte. Anschließend wurde auf 80°C aufgeheizt und so lange bei 80°C gerührt, bis IR-spektroskopisch keine freien NCO-Gruppen mehr festzustellen waren. Danach wurden 125 g Solventnaphtha 100 zugegeben und unter Rühren eingelöst. Das Produkt wurde abgekühlt und abgefüllt. Es wurden folgende Kenndaten ermittelt:
Festkörpergehalt: 80 %
Viskosität bei 23°C: 17520 mPa.s
Farbe: farblos
berechneter blockierter NCO-Gehalt ca. 12,4 %

### Anwendungsbeispiele:

Es wurden Klarlacke durch inniges Vermischen folgender Einsatzstoffe bei Raumtemperatur hergestellt. Dabei handelt es sich bei den Beispielen 17 bis 21 um erfindungsgemäße 1K PUR-Dispersionen und bei dem Beispiel 22 um eine Vergleichsdispersion auf Basis eines handelsüblichen Epoxidharzes.

| **Formulierung** | **Beispiel 17** | **Beispiel 18** | **Beispiel 19** | **Beispiel 20** | **Beispiel 21** | **Vergleichsbeispiel 22** |
|---|---|---|---|---|---|---|
| Polyester **Beispiel 5** | 38,8 g | | | | | |
| Polyester **Beispiel 4** | | 38,8 g | | | | |
| Polyester **Beispiel 1** | | | 46,6 g | | | |
| Polyester **Beispiel 3** | | | | 46,6 g | | |
| Produkt aus **Beispiel 15** | | | | | 84,2 g | |
| Desmodur® VP LS 2078¹⁾ | 14,6 g | | | | | |
| Blockiertes Polyisocyanat **Beispiel 6** | | 14,6 g | | | | |
| Blockiertes Polyisocyanat **Beispiel 16** | | | 11,5 g | 11,5 g | | |
| Butylglykol | 11,5 g | 11,5 g | 8,8 g | 8,8 g | | |
| Wasser/Butylglykol 85 : 15 | | | | | 15,8 g | |
| N,N-Dimethylethanolamin, 10 %ig in Wasser | 35,1 g | 35,1 g | 33,1 g | 33,1 g | | |
| Formaldehyd/Phenolharz²⁾ | | | | | | 13,8 g |
| Epikote® 1007³⁾ | | | | | | 82,9 g |
| Phosphorsäure, 10 %ig in n-Butanol | | | | | | 3,3 g |

| | | | | | | |
|---|---|---|---|---|---|---|
| ¹⁾ Blockiertes aliphatisches Polyisocyanat (IPDI) der Bayer MaterialScience AG, Leverkusen, DE ²⁾ Resistherm LVP BBB 2036, Bayer MaterialScience AG, Leverkusen, DE ³⁾ Epoxidharz der Resolution Europe BV, 3190 AN Hoogvliet Rt, NL | | | | | | |

Die obigen Klarlacke wurden auf Weißblechplatten E1 (Rasselstein Hoesch, Andemach, DE) mit einem handelsüblichen Rakel der Firma Deka appliziert und für 10 Minuten bei 180°C im Umluftofen eingebrannt. Es ergaben sich Trockenfilmschichtstärken von ca. 8-10 µm.

### Prüfergebnisse:

Folgende lacktechnische Eigenschaften wurden ermittelt:

| **Beispiel** | **17** | **18** | **19** | **20** | **21** | **V22** |
|---|---|---|---|---|---|---|
| Haftung Gitterschnitt^{a)} | 0 | 0 | 0 | 0 | 0 | 0 |
| Schlagbiegeprüfung^{b)} (mm gerissen) | 20 | 20 | 30-40 | 20-30 | 20 | 20-30 |
| Tiefzug/Rund-näpfchen^{c)} | 0 | 0 | 0 | 0 | 0 | 0 |
| Stapelfestigkeit^{d)} | 1 | 1 | 1 | 1 | 1 | 1 |
| MEK-Wischtest^{e)} | 45-50 x | 35-40 x | 40-45 x | 50-55 x | 45-50x | 80x(weich) |
| Sterilisation^{f)} | 0 | 1 | 1 | 0 | 0 | 0 |

| | | | | | | |
|---|---|---|---|---|---|---|
| ^{a)} Haftung Gitterschnitt (nach DIN 53151) Bewertung: 0= gut, 5= schlecht. ^{b)} Erichsen Schlagfaltprüfgerät Typ 471 (Prüfmaschine (Erichsen GmbH & Co KG, Hemer, DE), Schlaghammer 2300 g, Fallhöhe 650 mm, Angabe der Risslänge in mm. ^{c)} Erichsen Tiefzieh-Näpfchen-Prüfinaschine (Erichsen GmbH & Co KG, Hemer, DE), Bewertung nach DIN 53230. ^{d)} Je 2 beschichtete Platten wurden mit den lackierten Seiten gegeneinander gestapelt. Zwischen die beschichteten Platten wurde ein Schwarzbandfilter gelegt. Der Stapel wurde anschließend mit einer Stahlplatte zur besseren Gewichtsverteilung und einem 5 kg Gewicht belastet und 16 h bei 50°C gelagert. Nach Lagerung wurden etwaige Beschädigungen des Films (wie Abdruckspuren des Filterpapiers) visuell abgemustert; Bewertung: 0= gut, 5= schlecht. ^{e)} Ein mit Methylethylketon (MEK) getränkter Wattebausch wurde mit einem konstanten Druck auf dem Lackfilm 100 mal hin und her bewegt (100 Doppelhübe). Falls bei weniger als 100 Doppelhüben bereits starke Beschädigung oder Ablösung zu beobachten war, wurde der Test abgebrochen. Anschließend wurden die Platten visuell auf Trübung und/oder Filmablösung beurteilt. ^{f)} Ausgehärtete Beschichtungen wurden in einem Sterilisator (Aesculap JA 154, Aesculap AG, Tuttlingen, DE), 2 h bei 1,2 bar / 121°C behandelt und anschließend erfolgte Untersuchung der Beschichtung wird auf Haftungsverlust (Strippen), Glanzverlust, Wasserflecken, Blasenbildung; Bewertung: 0=gut, 5= schlecht | | | | | | |

### Diskussion der Ergebnisse:

Alle geprüften Lacke haben eine sehr gute Haftung auf Weißblech und zeigen eine gute Elastizität. Die Stapelfestigkeit und die Beständigkeiten der Lacke sind vergleichbar gut, wobei der Vergleichslack V22 eine etwas bessere MEK-Beständigkeit zeigt. Der besondere Vorteil bei den erfindungsgemäßen Lacken V 17 bis V21 ist jedoch, dass sie völlig frei von Bisphenol A Diglycidylether (BADGE) sind, weil sie nicht auf Epoxidharzen als Rohstoffe basieren. Das bei den Vernetzem verwendete Blockierungsmittel konnte analytisch in den Beschichtungen nicht nachgewiesen werden.

Die erfindungsgemäß beschichteten Platten wurden 2h bei 121 °C in 120 ml eines Gemisches gleicher Volumina Ethanol und Wasser gelagert. Die Flüssigkeit wurde daraufhin chromatographisch auf freigesetztes Blockierungsmittel untersucht. Es wurde bei einer Nachweisgrenze von 3 µg/l kein freigesetztes Blockierungsmittel gefunden.

## Patentansprüche

1. Verwendung eines wässrigen Beschichtungsmittels enthaltend
A) mindestens ein im Mittel mindestens zwei NCO-Gruppen pro Molekül enthaltendes Polyisocyanat bei dem mindestens 85 % der NCO-Gruppen mit einem Blockierungsmittel blockiert sind, wobei das Blockierungsmitttel ε-Caprolactam und/oder eine Hydroxycarbonsäure ist,
B) mindestens ein im Mittel mindestens zwei reaktive Hydroxylgruppen pro Molekül enthaltendes hydrophiliertes Polyesterpolyol oder Gemisch aus hydrophilierten und nicht hydrophilierten Polyesterpolyolen mit einer Säurezahl von ≥ 15 mg KOH/g, einer Hydroxylzahl von 20 bis 300 mg KOH/g und einem gewichtsgemittelten Molekulargewicht M_{w} von > 1500 g/mol und
C) gegebenenfalls Hilfs- und Zusatzstoffen,
wobei das Verhältnis zwischen den blockierten Isocyanatgruppen (Komponente A) zu allen gegenüber Isocyanaten reaktionsfähigen Gruppen 0,5 bis 5,0 zu 1 beträgt, zur Innenbeschichtung von Nahrungsmittelverpackungen.

2. Verwendung gemäß Anspruch 1, **dadurch gekennzeichnet, dass** die Polyisocyanate (A)
i) 100 Äquivalent-% Polyisocyanat,
ii) 60 - 100 Äquivalent-%, Hydroxybenzoesäure-Derivate der Formel (I), 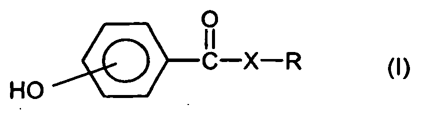 in welcher
X Sauerstoff, NH oder NR und
R Wasserstoff, einen C₁- bis C₈-Alkyl-oder Cycloalkylrest bedeutet,
und/oder ε-Caprolactam,
iii) 0-40 Äquivalent-% einer mindestens difunktionellen Hydroxyl- und/oder Aminogruppen enthaltenden Verbindung, mittleren Molgewichts von 32 bis 3000, sowie
iv) gegebenenfalls Zuschlagstoffe und Hilfsstoffe enthalten,
wobei die Mengenverhältnisse der Reaktionspartner so gewählt werden, dass das Äquivalentverhältnis von NCO-Gruppen des Polyisocyanats zu gegenüber Isocyanaten reaktionsfähigen Gruppen der Komponenten ii) und iii) bei 1:0,8 bis 1:1,2 liegt.

3. Verwendung gemäß Anspruch 1, **dadurch gekennzeichnet, dass** die Polyesterpolyole (B) hergestellt werden durch Umsetzung von
a) 49 bis 40 Mol% einer Carbonsäurekomponente enthaltend
a1) eine oder mehrere aliphatische, cycloaliphatische, araliphatische und/oder aromatische Carbonsäuren einer COOH-Funktionalität ≥ 2 oder deren Anhydride und
a2) gegebenenfalls aromatische, cycloaliphatische und/oder aliphatische Monocarbonsäuren
mit
b) 51 bis 60 Mol-% einer Alkoholkomponente enthaltend
b1) ein oder mehrere aliphatische, cycloaliphatische und/oder araliphatische Polyole eines zahlenmittleren Molekulargewichts von 62 bis 272 g/mol sowie einer mittleren OH-Funktionalität ≥ 2 und
b2) gegebenenfalls aliphatische, cycloaliphatische und/oder araliphatische Monoalkohole
und gegebenenfalls
c) Wasser
d) Neutralisationsmitteln und
e) gegebenenfalls Lösemitteln, Hilfs- und Zusatzstoffen.

4. Verwendung gemäß Anspruch 1, **dadurch gekennzeichnet, dass** die Polyesterpolyole (B) Säurezahlen im Bereich von 20 bis 75 mg KOH/g Festharz aufweisen.

5. Verwendung der wässrigen Beschichtungsmittel gemäß Anspruch 1 zur Beschichtung von Emballagen und zur Innenbeschichtung von Dosen.

6. Verwendung gemäß Anspruch 1, **dadurch gekennzeichnet, dass** das Beschichtungsmittel auf ein, gegebenenfalls vorbeschichtetes, metallisches Substrat aufgebracht und unter erhöhten Temperaturen ausgehärtet wird.

7. Verwendung gemäß Anspruch 1, **dadurch gekennzeichnet, dass** die Trockenfilmschichtdicke für die Innenbeschichtung 1 bis 50 µm beträgt.

## Claims

1. Use of an aqueous coating composition comprising
A) at least one polyisocyanate, containing on average at least two NCO groups per molecule, in which at least 85% of the NCO groups are blocked with a blocking agent, the blocking agent being ε-caprolactam and/or a hydroxy carboxylic acid,
B) at least one hydrophilized polyester polyol containing on average at least two reactive hydroxyl groups per molecule, or mixture of hydrophilized and non-hydrophilized polyester polyols, having an acid number of ≥ 15 mg KOH/g, a hydroxyl number of 20 to 300 mg KOH/g and a weight-average molecular weight M_{w} of > 1500 g/mol, and
C) optionally auxiliaries and additives,
the ratio between the blocked isocyanate groups (component A) to all isocyanate-reactive groups being 0.5 to 5.0:1, for the internal coating of food packaging.

2. Use according to Claim 1, **characterized in that** the polyisocyanates (A) contain
i) 100 equivalent% of polyisocyanate,
ii) 60 - 100 equivalent% of hydroxybenzoic acid derivatives of the formula (I) 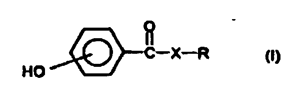 in which
X is oxygen, NH or NR and
R is hydrogen, a C₁ to C₈ alkyl or cycloalkyl radical,
and/or ε-caprolactam,
iii) 0-40 equivalent% of an at least difunctional compound containing hydroxyl groups and/or amino groups, with an average molar weight of 32 to 3000, and also
iv) optionally adjuvants and auxiliaries,
the proportions of the reactants being selected such that the equivalents ratio of NCO groups in the polyisocyanate to isocyanate-reactive groups in components ii) and iii) is 1:0.8 to 1:1.2.

3. Use according to Claim 1, **characterized in that** the polyester polyols (B) are prepared by reaction of
a) 49 to 40 mol% of a carboxylic acid component comprising
a1) one or more aliphatic, cycloaliphatic, araliphatic and/or aromatic carboxylic acids with a COOH functionality ≥ 2 or anhydrides thereof and
a2) optionally aromatic, cycloaliphatic and/or aliphatic monocarboxylic acids
with
b) 51 to 60 mol% of an alcohol component comprising
b1) one or more aliphatic, cycloaliphatic and/or araliphatic polyols with a number-average molecular weight of 62 to 272 g/mol and an average OH functionality ≥ 2 and
b2) optionally aliphatic, cycloaliphatic and/or araliphatic monoalcohols
and optionally
c) water
d) neutralizing agents and
e) optionally solvents, auxiliaries and additives.

4. Use according to Claim 1, **characterized in that** the polyester polyols (B) have acid numbers in the range from 20 to 75 mg KOH/g resin solids.

5. Use of the aqueous coating compositions according to Claim 1 for coating packaging and for the internal coating of cans.

6. Use according to Claim 1, **characterized in that** the coating composition is applied to an optionally precoated metallic substrate and cured at elevated temperatures.

7. Use according to Claim 1, **characterized in that** the dry film coat thickness for the internal coating is 1 to 50 µm.

## Revendications

1. Utilisation d'un agent de revêtement aqueux, contenant
A) au moins un polyisocyanate contenant en moyenne au moins deux groupes NCO par molécule, où au moins 85% des groupes NCO sont bloqués avec un agent de blocage, l'agent de blocage étant de l'ε-caprolactame et/ou un acide hydroxycarboxylique,
B) au moins un polyesterpolyol hydrophilisé, contenant en moyenne au moins deux groupes hydroxyle réactifs par molécule ou un mélange de polyesterpolyols hydrophilisés et non hydrophilisés, présentant un indice d'acide ≥ 15 mg KOH/g, un indice d'hydroxyle de 20 à 300 mg de KOH/g et un poids moléculaire pondéral moyen M_{w} > 1500 g/mole et
C) le cas échéant des adjuvants et des additifs,
le rapport entre les groupes isocyanate bloqués (composant A) et à tous les groupes aptes à une réaction avec les isocyanates valant 0,5 à 5,0:1, pour le revêtement interne d'emballages alimentaires.

2. Utilisation selon la revendication 1, **caractérisée en ce que** les polyisocyanates (A) contiennent
i) 100% en équivalent de polyisocyanate,
ii) 60-100% en équivalent de dérivés d'acide hydroxybenzoïque de formule (I), 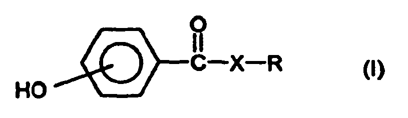 dans laquelle
X signifie oxygène, NH ou NR et
R signifie hydrogène, un radical C₁-C₈-alkyle ou cycloalkyle,
et/ou d'ε-caprolactame,
iii) 0-40% en équivalent d'un composé au moins difonctionnel contenant des groupes hydroxyle et/ou amino, de poids moléculaire moyen de 32 à 3000, ainsi que
iv) le cas échéant des additifs et des adjuvants,
les rapports des quantités des partenaires de réaction étant choisis de manière telle que le rapport d'équivalents des groupes NCO du polyisocyanate et des groupes aptes à une réaction avec des isocyanates des composants ii) et iii) vaut 1:0,8 à 1:1,2.

3. Utilisation selon la revendication 1, **caractérisée en ce que** les polyesterpolyols (B) sont préparés par transformation
a) de 49 à 40% en mole d'un composant acide carboxylique contenant
a1) un ou plusieurs acides carboxyliques aliphatiques, cycloaliphatiques, araliphatiques et/ou aromatiques, présentant une fonctionnalité COOH ≥ 2 ou leurs anhydrides et
a2) le cas échéant des acides monocarboxyliques aromatiques, cycloaliphatiques et/ou aliphatiques
avec
b) 51 à 60% en mole d'un composant alcool contenant
b1) un ou plusieurs polyols aliphatiques, cycloaliphatiques et/ou araliphatiques présentant un poids moléculaire numérique moyen de 62 à 272 g/mole ainsi qu'une fonctionnalité OH moyenne ≥ 2 et
b2) le cas échéant des monoalcools aliphatiques, cycloaliphatiques et/ou araliphatiques
et le cas échéant
c) de l'eau
d) des agents de neutralisation et
e) le cas échéant des solvants, des adjuvants et des additifs.

4. Utilisation selon la revendication 1, **caractérisée en ce que** les polyesterpolyols (B) présentent des indices d'acide dans la plage de 20 à 75 mg de KOH/g de résine solide.

5. Utilisation de l'agent de revêtement aqueux selon la revendication 1 pour le revêtement d'emballages et pour le revêtement interne de boîtes.

6. Utilisation selon la revendication 1, **caractérisée en ce que** l'agent de revêtement est appliqué sur un substrat métallique, le cas échéant revêtu au préalable, et durci à des températures augmentées.

7. Utilisation selon la revendication 1, **caractérisée en ce que** l'épaisseur de couche du film sec pour le revêtement interne est de 1 à 50 µm.
